# EUROPÄISCHE PATENTSCHRIFT

(11) **EP 1 108 629 B1**
(45) Veröffentlichungstag und Bekanntmachung des Hinweises auf die Patenterteilung: **21.07.2004**
(21) Anmeldenummer: 00126161.9
(22) Anmeldetag: 30.11.2000
(51) Int. Cl.: B60R 25/00, E05B 49/00, G07C 9/00

(54) **Vorrichtung zur Aktivierung und/oder Deaktivierung einer Sicherheitseinrichtung**
Activation and/or deactivation device for a security system
Dispositif d'activation et/ou désactivation pour un système de sécurité

(30) Priorität: 16.12.1999 DE 19960783
(43) Veröffentlichungstag der Anmeldung: 20.06.2001
(73) Patentinhaber: Siemens Aktiengesellschaft, 80333 München (DE)
(72) Erfinder: Lässle, Hans-Peter, 61250 Usingen (DE); Schmid, Dietmar, 65606 Villmar (DE)

(56) Entgegenhaltungen:
- DE-A- 3 616 197
- US-A- 5 883 443

## Beschreibung

Die Erfindung betrifft eine aus US 5 883 443 A bekannte Vorrichtung zur Aktivierung und/oder Deaktivierung einer Sicherheitseinrichtung, insbesondere einer Zugangseinrichtung für ein Kraftfahrzeug, mit einer tragbaren Sendeeinheit zum drahtlosen Senden einer codierten Information, welche von einer Empfängervorrichtung empfangen und mit einer vorgegebenen codierten Information verglichen wird, wobei von der Empfängervorrichtung im Fall der Übereinstimmung beider Informationen ein Ansteuersignal an die Sicherheitseinrichtung abgebbar ist und die Empfänger vorrichtung mit einer mechanischen Einrichtung zur Betätigung der Sicherheitseinrichtung verbunden ist.

Bekannte Vorrichtungen zur Aktivierung und/oder Deaktivierung eines Schließsystems in einem Kraftfahrzeug besitzen einen tragbaren Sender, welcher nach Aufforderung eine codierte Information an eine Empfängereinrichtung aussendet, welche fest im Kraftfahrzeug installiert ist. Die Empfängereinrichtung vergleicht die übertragene codierte Information mit einer in ihr erzeugten vorgegebenen Information. Bei Übereinstimmung beider Informationen wird das Schließsystem durch die Empfängereinrichtung angesteuert.

Um die Sicherheitseinrichtung beispielsweise bei Ausfall der Batterie des Senders weiterhin betätigen zu können, ist die Empfängereinrichtung mit einem Schließzylinder verbunden, welcher mit Hilfe eines Schlüssels mechanisch betätigt werden kann, wodurch die Sicherheitseinrichtung ebenfalls aktiviert bzw. deaktiviert wird.

Da im Normalfall nur die Fernbedienung zur Ansteuerung des Schließsystems genutzt wird, muss sichergestellt werden, dass nur ganz bestimmte Sender eine Zentralverriegelungsanlage ent- bzw. verriegeln können. Deshalb sind die Übertragungsprotokolle mit einer festen Zuordnung versehen, welche aus einem Festcode und einem Wechselcode besteht.

Zur Berechnung der jeweils nächsten Wechselcodewerte wird im Sender und im Empfänger der gleiche Algorithmus verwendet. Dabei besitzt der Empfänger zur Ent- bzw. Verriegelung einen sogenannten Fangbereich, welcher immer mehrere in der Zukunft liegende codierte Informationen als gültig zuläßt. Der Wechselcode wird im Sender durch Anforderung geändert, im Empfänger hingegen bei Empfang einer gültigen Informationen mit der des Senders gleichgesetzt. Somit kann es vorkommen, daß, wenn mehrere codierte Informationen des Senders den Empfänger nicht erreichen, eine zulässige codierte Information außerhalb des Fangbereiches des Empfängers liegt und somit vom Empfänger nicht erkannt wird.

Insbesondere bei der Verwendung von Funkfernbedienungen, wo codierte Informationen über weite Entfernungen mit Hilfe eines Funksignals transportiert werden, kann durch Störung innerhalb der Übertragungsstrecke der Empfang der vom Sender ausgesandten codierten Information durch den Empfänger beeinträchtigt oder ganz unterbrochen sein. Auch kann eine solche Störung bewußt erzeugt werden, um die vom Sender ausgesandten codierten Informationen aufzuzeichnen und zum unbefugten Öffnen des Kraftfahrzeuges zu verwenden. Somit ist eine zuverlässige Arbeitsweise der Sicherheitseinrichtung nicht gewährleistet.

Der Erfindung liegt somit die Aufgabe zugrunde, eine Vorrichtung zur Aktivierung und/oder Deaktivierung einer Sicherheitseinrichtung anzugeben, bei welcher ein unbefugtes Deaktivieren der Sicherheitseinrichtung sicher verhindert wird.

Erfindungsgemäß wird die Aufgabe dadurch gelöst, dass nach der mechanischen Aktivierung der Sicherheitseinrichtung die Empfängervorrichtung für den Empfang und/oder die Auswertung der codierten Information und/oder die Ausgabe des Ansteuersignals an die Sicherheitseinrichtung gesperrt ist, wobei die Blockierung nach der mechanischen Deaktivierung der Sicherheitseinrichtung aufgehoben wird.

Die Erfindung hat den Vorteil, dass durch Blockierung des Empfängers die Benutzung von codierten Informationen, welche der Sender aussendet, zum unbefugten Öffnen der Sicherheitseinrichtung verhindert wird. Nach mehrfachem Betätigen des Senders wird der Nutzer feststellen, dass der Empfänger auf die ausgesandten Sendersignale nicht reagiert und die gewünschte Aktion nicht ausgeführt werden kann. Um die Aktion dennoch auszuführen, wird er den herkömmlichen Weg wählen, d. h. einen Schlüssel in den Schließzylinder einführen und die Sicherheitseinrichtung ent- bzw. verriegeln. Da aber gleichzeitig mit dieser mechanischen Verriegelung die Funkfernbedienung außer Funktion gesetzt wird, wird somit auch zuverlässig verhindert, dass mittels abgehörtem und noch nicht vom Empfänger registrierten codierten Informationen die Sicherheitseinrichtung deaktiviert werden kann. Erst nach einer mechanische Deaktivierung der Sicherheitseinrichtung arbeitet die Funkfernbedienung wieder in der gewohnten Weise.

Mittels einer, unmittelbar nach der mechanischen Deaktivierung der Sicherheitseinrichtung vom Sender zum Empfänger übertragenen codierten Information werden alle eventuell zuvor aufgezeichneten codierten Informationen in den Bereich der Vergangenheit versetzt, da im Empfänger bei Empfang einer gültigen Information vom Sender diese mit der im Empfänger vorhandenen gleichgesetzt wird. D. h. sie liegen außerhalb des Fangbereiches des Empfängers, so dass keine Aktionen mit Hilfe dieser abgehörten codierten Informationen ausgelöst werden können.

Besonders schnell und zuverlässig erfolgt dies, wenn die Empfängervorrichtung nach Feststellung der mechanischen Deaktivierung der Sicherheitseinrichtung ein Reizsignal zur Aussendung der codierten Information an die tragbare Sendeeinheit sendet.

Vorteilhafterweise sind in der tragbaren Sendeeinheit und in der Empfängervorrichtung jeweils ein Codegenerator angeordnet, wobei der erste Codegenerator der tragbaren Sendeeinheit die zu übertragende codierte Information und der zweite Codegenerator der Empfängervorrichtung die vorgegebene codierte Information erzeugt, wobei beide Codegeneratoren nach dem gleichen Algorithmus arbeiten.

Dabei können jeweils eine oder mehrere voneinander unabhängige Zufallszahlen als Code dienen, die nach bestimmten Rechenregeln bearbeitet und im Empfänger miteinander verglichen werden.

Bei einer Weiterbildung schalten die Codegeneratoren der tragbaren Sendeeinheit bzw. der Empfängervorrichtung selbsttätig den Algorithmus weiter. Dabei kann ein Algorithmus zur mehrmaligen Abwandlung der zu übertragenden codierten Information und der vorgegebenen codierten Information verwendet werden. Es ist aber auch denkbar, dass der Algorithmus zur Abwandlung der zu übertragenen codierten Information und der vorgegebenen codierten Information nach jeder Aktion der tragbaren Sendeeinheit geändert wird.

Die Abhörsicherheit des Systems wird dadurch weiter erhöht, dass der Codegenerator der tragbaren Sendeeinheit nach Beendigung der Aussendung der codierten Information und der Codegenerator der Empfängervorrichtung nach Empfang einer gültigen codierte Information weitergeschaltet werden.

Um zu verhindern, dass nach einer bestimmten Zeit der Fangbereich der Empfängervorrichtung durch die codierte Information der tragbaren Sendeeinheit überschritten wird, werden der Codegenerator der tragbaren Sendeeinheit und der Codegenerator der Empfängervorrichtung um die gleiche Anzahl von Schritten weitergeschaltet.

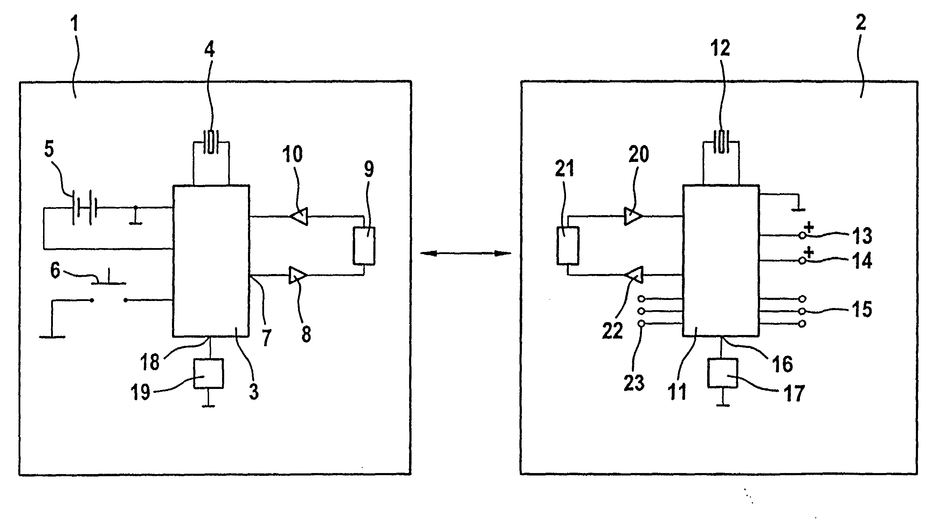

Die Erfindung läßt zahlreiche Ausführungsformen zu. Eine davon soll anhand der in der Zeichnung dargestellten Figuren erläutert werden.

Bei einer Sicherheitseinrichtung im Kraftfahrzeug, beispielsweise einer Zentralverriegelungseinrichtung umfaßt eine tragbare Sendeeinheit 1 einen Mikrocomputer 3, welchem ein Schwingquarz 4 zur Takterzeugung zugeordnet ist.

Zur Stromversorgung dient eine Batterie 5, welche zur Erzielung einer geringen Baugröße der Vorrichtung als Knopfzelle ausgebildet ist. Ein Tastschalter 6 dient zum Einschalten der Sendevorrichtung 1. Darüber hinaus ist der Mikrocomputer 3 mit einem Zufallsgenerator 19 verbunden.

Der Ausgang 7 des Mikrocomputers 3 führt zur Aussendung von Funksignalen über einen Verstärker 8 zu einer Antenne 9. Zum Empfang von Funksignalen ist die Antenne 9 über einen weiteren Verstärker 10 mit dem Mikrocomputer 3 verbunden.

Die Empfängervorrichtung 2 weist ebenfalls einen Mikrocomputer 11 mit einem Schwingquarz 12 auf. Über den Anschluß 13 ist der Mikrocomputer 11 an die Stromquelle des Kraftfahrzeuges (Klemme 30) angeschlossen. Der Anschluß 14 ist mit dem Zündschalter (Klemme 15) des Kraftfahrzeuges verbunden, so dass bei jedem Startvorgang eine Ansteuerung des Mikrocomputers 11 erfolgt. Die Eingänge 15 des Mikrocomputers 11 sind jeweils einer in einer Tür des Kraftfahrzeuges angeordneten Schließvorrichtung zugeordnet und können durch mechanische Betätigung mittels eines Schlüssels zu einer Ansteuerung des Mikrocomputers 16 genutzt werden, wenn die Normalfunktion der Steuervorrichtung gestört ist. An einem weiteren Eingang 16 des Mikrocomputers 11 ist ebenfalls ein eine Zufallsimpulsfolge erzeugender Generator 17 angeschlossen. Über einen Verstärker 20 ist eine Sende-/Empfangsantenne 21 an den Mikrocomputer 11 angeschlossen. Jeder der drei Anschlüsse 23 des Mikrocomputers 11 führt zu einer Schließvorrichtung der Zentralverriegelung des Kraftfahrzeuges und überträgt das vom Mikrocomputer 11 abgegebene Ansteuersignal.

Die Bildung der codierten Information erfolgt mit Hilfe eines Festcodes und eines Wechselcodes. Der Wechselcode wird mit Hilfe der von dem Zufallsgenerator 19, 17 generierten Zufallszahl und dem im Mikroprozessor gespeicherten Algorithmus erzeugt. Der Wert des Wechselcodes wird in der tragbaren Sendeeinheit durch ein bestimmtes Ereignis verändert, z. B. nach jeder Betätigung des Tastschalters 6.

In der Empfängereinrichtung 2 werden die Werte des Wechselcodes in zugelassene und nicht zugelassene unterteilt. Dabei gilt immer, dass die zugelassenen Werte in der Zukunft liegen und die nicht zugelassenen Werte in der Vergangenheit bzw. der Gegenwart. Die Trennlinie dieser Bereiche wird durch den aktuellen Wert des Wechselcodes und den Fangbereich bestimmt, wobei der aktuelle Wert der Gegenwart und der Fangbereich einer vorgegebenen Anzahl von zukünftigen der zu übertragenden codierten Informationen entspricht.

Die Einrichtung arbeitet wie folgt:

Durch Betätigung des Tastschalters 6 erhält der Mikrocomputer 3 der tragbaren Sendeeinheit 1 den Befehl, den Algorithmus zur Erzeugung einer codierten Information zu starten, wobei eine Zufallszahl vom Generator 19 bereit gestellt wird. Die so erzeugte codierte Information wird über die Antenne 9 an den im Kraftfahrzeug befindlichen Empfänger 2 ausgesandt, wo er durch die Antenne 21 empfangen und an den Mikroprozessor 11 weitergeleitet wird. Gleichzeitig wird im Mikroprozessor 11 die mit Hilfe des Zufallszahlgenerators 17 erzeugte vorgegebenen codierten Information mit der empfangen codierten Information verglichen. Bei Übereinstimmung beider Codierungen gibt der Mikroprozessor 11 über die Anschlüsse 23 ein Ansteuersignal an die Türschlösser der Zentralverriegelungsanlage des Kraftfahrzeuges zum Verschließen der Türen.

Bei einem weiteren Empfang einer codierten Information durch den Empfänger 2 wird ebenfalls die neu empfangene codierten Information mit der vorgegebenen codierten Information verglichen. Auch bei dieser Übereinstimmung wird der Befehl der Funkfernbedienung "Entriegeln" an die Schloßnußschalter über die Leitungen 23 weitergeben und die Türen des Kraftfahrzeuges werden entriegelt.

Sollte nun der Empfang des Empfängers 2 gestört sein und der Nutzer der tragbaren Sendeeinheit 1 trotz mehrfacher Betätigung des Tasters 6 keine Reaktion am Kraftfahrzeug erkennen, wird er mit Hilfe eines nicht dargestellten Schlüssels die Schlösser der Zentralverriegelungsanlage aktivieren und dadurch das Fahrzeug verschließen. Dies detektiert der Mikroprozesser 11 des Empfängers 2 über die Anschlüsse 15. Als Aktion auf diese mechanische Verriegelung des Kraftfahrzeuges sperrt der Mikroprozessor 11 die Auswertung der über die Antenne 21 nach der Verriegelung eintreffenden Signale, so dass infolge von drahtlos übertragenen Signalen an die Sicherheitseinrichtung über die Anschlüsse 23 keine Ansteuersignale ausgegeben werden.

Soll nun die Funkfernbedieung wieder aktiviert werden, wird wieder mit dem Schlüssel der Schloßnußschalter und somit die Fahrzeugtür entriegelt, was der Mikroprozessor 11 über die Anschlüsse 15 erkennt. Dabei wird beim gleichzeitigen Entriegeln der Türen die Empfängervorrichtung aktiv gegenüber den eintreffenden codierten Informationen geschaltet.

Um zu verhindern, dass abgehörte codierte Informationen, die noch nicht vom Empfänger ausgewertet wurden, zu einer Ansteuerung der Zentralverriegelungsanlage führen, wird sofort nach der mechanischen Entriegelung eine codierte Information vom Sendeeinheit 1 zur Empfängervorrichtung 2 gesandt. Dies bewirkt, dass der Algorithmus in der Sendeeinheit 1 und der Empfängervorrichtung 2 weitergeschaltet werden. Die unmittelbare Aussendung einer aktuellen codierten Information erfolgt durch die tragbare Sendeeinheit 1 nach Empfang eines Reizsignales, welches die Empfängervorrichtung 2 aufgrund der Entriegelung der Fahrzeugtüren aussendet.

Werden nun Funksignale vom der Empfängervorrichtung 2 empfangen, die vor der Blockierung der Empfängervorrichtung 2 durch die Sendeeinheit 1 abgegeben wurden, so liegen diese nicht mehr im Fangbereich der Empfängervorrichtung 2 und können somit auch nicht zur Aktivierung bzw. Deaktivierung der Schließvorrichtung führen.

Um zu gewährleisten, dass nach bestimmten Zeiträumen sich der Algorithmus im Mikroprozessor 3 und der Algorithmus im Mikroprozessor 11 den selben Wert einnehmen, wird nach jedem Betätigen der Bedientaste 6 eine Synchronisierung durchgeführt. Aufgrund dieser Einrichtung wird erreicht, dass alle ausgesandten codierten Informationen und eventuell abgehörten Informationen mit Sicherheit in der Vergangenheit liegen.

## Patentansprüche

1. Vorrichtung zur Aktivierung und/oder Deaktivierung einer Sicherheitseinrichtung, insbesondere einer Zugangseinrichtung für ein Kraftfahrzeug, mit einer tragbaren Sendeeinheit zum drahtlosen Senden einer codierten Information, welche von einer Empfängervorrichtung empfangen und mit einer vorgegebenen codierten Information verglichen wird, wobei von der Empfängervorrichtung im Fall der Übereinstimmung beider Informationen ein Ansteuersignal an die Sicherheitseinrichtung abgegeben wird und die Empfängervorrichtung mit einer mechanischen Einrichtung verbunden ist, welche mittels eines Schlüssels betätigbar ist, **dadurch gekennzeichnet, dass** nach einer mechanischen Aktivierung der Sicherheitseinrichtung die Empfängervorrichtung (2) für den Empfang und/oder die Auswertung der übertragenen codierten Information und/oder die Ausgabe des Ansteuersignales gesperrt ist, wobei die Blockierung nach der mechanischen Deaktivierung der Sicherheitseinrichtung aufgehoben wird.

2. Vorrichtung nach Anspruch 1, **dadurch gekennzeichnet, dass** unmittelbar nach der mechanischen Deaktivierung der Sicherheitseinrichtung eine codierte Information vom der tragbaren Sendeeinheit (1) zur Empfängereinrichtung (2) übertragen wird.

3. Vorrichtung nach Anspruch 2 **dadurch gekennzeichnet, dass** die Empfängervorrichtung (2) nach Feststellung der mechanischen Deaktivierung der Sicherheitseinrichtung ein Reizsignal zur Aussendung der codierten Information an die tragbare Sendeeinheit (1) sendet.

4. Vorrichtung nach Anspruch 1, 2 oder 3 **dadurch gekennzeichnet, dass** in der tragbaren Sendeeinheit (1) und in der Empfängervorrichtung (2) jeweils ein Codegenerator (19, 17) angeordnet ist, wobei der erste Codegenerator (19) der tragbaren Sendeeinheit (1) die zu übertragende codierte Information und der zweite Codegenerator (17) der Empfängervorrichtung (2) die vorgegebene codierte Information erzeugt, wobei beide Codegeneratoren (19, 17) nach dem gleichen Algorithmus arbeiten.

5. Vorrichtung nach Anspruch 4 **dadurch gekennzeichnet, dass** der erste Codegenerator (19) der tragbaren Sendeeinheit (1) und der zweite Codegenerator (19) der Empfängervorrichtung (2) selbsttätig den Algorithmus zur Erzeugung der zu übertragenden codierten Information bzw. der vorgegebenen codierten Information weiterschalten.

6. Vorrichtung nach Anspruch 5 **dadurch gekennzeichnet, dass** der Codegenerator (19) der tragbaren Sendeeinheit (2) nach Beendigung der Aussendung der codierten Information und der Codegenerator (17) der Empfängervorrichtung (2) nach dem Empfang einer gültigen codierten Information weiterschalten.

7. Vorrichtung nach Anspruch 5 oder 6, **dadurch gekennzeichnet, dass** der Codegenerator (19) der tragbaren Sendeeinheit (1) und der Codegenerator (17) der Empfängervorrichtung (2) um die gleiche Anzahl von Schritten weitergeschaltet werden.

## Claims

1. Apparatus for activating and/or deactivating a security device, particularly an entry device for a motor vehicle, having a portable transmitter unit for wirelessly transmitting a coded information item which is received by a receiver apparatus and is compared with a prescribed coded information item, the receiver apparatus outputting an actuation signal to the security device if the two information items match and the receiver apparatus being connected to a mechanical device which can be operated using a key, **characterized in that** the receiver apparatus (2) is disabled for the reception and/or evaluation of the transmitted coded information item and/or for the output of the actuation signal after the security device has been mechanically activated, the block being lifted after the security device has been mechanically deactivated.

2. Apparatus according to Claim 1, **characterized in that** a coded information item is transmitted from the portable transmitter unit (1) to the receiver device (2) directly after the security device has been mechanically deactivated.

3. Apparatus according to Claim 2, **characterized in that** the receiver apparatus (2), having established that the security device has been mechanically deactivated, sends a stimulus signal to the portable transmitter unit (1) for transmission of the coded information item.

4. Apparatus according to Claim 1, 2 or 3, **characterized in that** the portable transmitter unit (1) and the receiver apparatus (2) each contain a code generator (19, 17), the first code generator (19) in the portable transmitter unit (1) generating the coded information item which is to be transmitted, and the second code generator (17) in the receiver apparatus (2) generating the prescribed coded information item, both code generators (19, 17) operating on the basis of the same algorithm.

5. Apparatus according to Claim 4, **characterized in that** the first code generator (19) in the portable transmitter unit (1) and the second code generator (19) in the receiver apparatus (2) advance the algorithm automatically in order to generate the coded information item which is to be transmitted and the prescribed coded information item.

6. Apparatus according to Claim 5, **characterized in that** the code generator (19) in the portable transmitter unit (2) is advanced after transmission of the coded information item has ended and the code generator (17) in the receiver apparatus (2) is advanced after reception of a valid coded information item.

7. Apparatus according to Claim 5 or 6, **characterized in that** the code generator (19) in the portable transmitter unit (1) and the code generator (17) in the receiver apparatus (2) are advanced by the same number of steps.

## Revendications

1. Dispositif d'activation et/ou de désactivation pour un système de sécurité, notamment un système d'accès destiné à un véhicule automobile, comprenant une unité d'émission portable pour l'émission sans fil d'une information codée, laquelle est reçue par un dispositif de réception et comparée à une information codée prédéfinie, un signal d'activation étant donné au système de sécurité par le dispositif de réception en cas de concordance des deux informations et le dispositif de réception étant raccordé à un dispositif mécanique, lequel est actionnable au moyen d'une clé, **caractérisé en ce qu'**après une activation mécanique du système de sécurité, le dispositif de réception (2) pour la réception et/ou l'évaluation de l'information codée transmise et/ou la sortie du signal d'activation est bloqué, le blocage étant supprimé après la désactivation mécanique du système de sécurité.

2. Dispositif selon la revendication 1, **caractérisé en ce que,** directement après la désactivation mécanique du système de sécurité, une information codée est transmise de l'unité d'émission portable (1) au dispositif de réception (2).

3. Dispositif selon la revendication 2, **caractérisé en ce qu'**après la constatation de la désactivation mécanique du système de sécurité, le dispositif de réception (2) émet un signal d'excitation pour l'émission de l'information codée à l'unité d'émission portable (1).

4. Dispositif selon la revendication 1, 2 ou 3, **caractérisé en ce qu'**un générateur de code (19, 17) est respectivement placé dans l'unité d'émission portable (1) et dans le dispositif de réception (2), le premier générateur de code (19) de l'unité d'émission portable (1) générant l'information codée à transmettre et le deuxième générateur de code (17) du dispositif de réception (2) générant l'information codée prédéfinie, les deux générateurs de code (19, 17) travaillant selon le même algorithme.

5. Dispositif selon la revendication 4, **caractérisé en ce que** le premier générateur de code (19) de l'unité d'émission portable (1) et le deuxième générateur de code (19) du dispositif de réception (2) commutent automatiquement l'algorithme pour générer l'information codée à transmettre resp. l'information codée prédéfinie.

6. Dispositif selon la revendication 5, **caractérisé en ce que** le générateur de code (19) de l'unité d'émission portable (2) commute une fois que l'information codée a été transmise, et **en ce que** le générateur de code (17) du dispositif de réception (2) commute après la réception d'une information codée valide.

7. Dispositif selon la revendication 5 ou 6, **caractérisé en ce que** le générateur de code (19) de l'unité d'émission portable (1) et le générateur de code (17) du dispositif de réception (2) sont commutés du même nombre de pas.
